# EUROPEAN PATENT SPECIFICATION

(11) **EP 3 632 203 B1**
(45) Date of publication and mention of the grant of the patent: **01.12.2021**
(21) Application number: 19200932.2
(22) Date of filing: 01.10.2019
(51) Int. Cl.: A01K 1/015, A63C 19/04, E01C 13/02, E01C 5/18, E01C 13/08

(54) **A COVERING FOR A STABLE FLOOR**
BELAG FÜR EINEN STALLBODEN
REVÊTEMENT POUR SOL D'ÉTABLE

(30) Priority: 01.10.2018 NL 2021743
(43) Date of publication of application: 08.04.2020
(73) Proprietor: Lia Holding B.V., 8531 AA Lemmer (NL)
(72) Inventor: ROELEVINK, Yke Lourens, 8532 BW Lemmer (NL)
(74) Representative: 't Jong, Bastiaan Jacob

(56) References cited:
- EP-A1- 0 560 448
- WO-A1-2017/152926
- WO-A1-2017/152926
- DE-A1- 2 515 098
- DE-A1- 2 515 098
- DE-U1- 8 913 999
- DE-U1- 8 913 999
- DE-U1- 29 518 977
- DE-U1- 29 518 977
- JP-A- 2008 223 361
- JP-A- 2008 223 361
- JP-B2- 4 865 612
- NL-C2- 1 033 217
- NL-C2- 1 033 217

## Description

The present invention relates to a stable floor covering according to the preamble of claim 1.

Such a covering is known in the art. An example of such a coverings is disclosed in DE 25 15 098 A1 or in NL 1 033 217 C2.

For example, such a known covering is positioned on a concrete stable floor in order to offer the animals staying thereon a soft, comfortable stay. Such a covering is often used to replace the straw or other organic material, such as compost, dried manure, which has been used up to now. In the art, straw or other organic material is seen as the cause of fine dust, which must be prevented according to the latest regulations.

This covering according to the prior art typically has a very good liquid-permeable cover layer, usually a plastic or non-synthetic textile layer, which is placed over the elastic material, in order to facilitate the passage of liquids through the covering and to to prevent solid parts from the animal excrements from reaching the elastic material. The elastic material used is an open-cell material which provides an elasticity to the covering and therefore comfort to the animals.

This known covering has the drawback that the elastic material retains moisture due to the open cells. The idea is that when using this covering on a porous or at least partially open surface, for example a grid floor or a grooved floor, the liquid will be drained off sufficiently. In practice, this known covering does not appear to be sufficiently effective. Animals enter the covering and lie on the covering in contact with moisture present in the elastic material. Contrary to what is intended, this leads to less comfort for the animals.

The invention now has for its object to provide an improved covering of the type mentioned in the preamble.

In particular, it is an object of the invention to provide a covering of the type mentioned in the preamble which discharges liquid from an upper side of the covering to an underside of the covering with a reduced chance of liquid flowing back from the covering to the upper side.

It is also an object of the invention to provide an improved covering which can be used in many applications, also other than covering floor floors.

In order to obtain at least one of the aforementioned objects, the invention therefore provides, according to a first embodiment, a stable floor covering comprising an elastically compressible liquid-permeable layer and a liquid-permeable film covering the elastically compressible layer on top, characterized in that the film has a lower liquid permeability than the elastically compressible layer. This embodiment of the invention provides the effect that liquid will not return to the top of the liquid-permeable film when an animal exerts pressure on the covering after liquid has fallen onto the covering and has penetrated the covering. The comfort for the animal is therefore greatly improved because it always stays on a dry surface.

The term "film" within the present description refers to both fabrics and membranes, cloths and other sheet-like materials that can act as a cover for the compressible layer and provide a liquid permeability.

According to a preferred embodiment, the covering comprises a grid-like structure which is adapted to allow a liquid to pass from an upper side to a lower side, which grid-like structure is situated under the elastically compressible layer. This provides a solid surface for the covering which, due to the grid structure, which by definition has holes, ensures that liquid can flow out of the underside of the covering at all times. The liquid will hereby be completely removed from the compressible layer, so that no moisture remains in the covering. This is because the animals would experience a reduced comfort if moisture remained behind.

By the term grid is meant a construction that has such large holes that liquid is not transported through the holes due to capillary action but because of gravity.

It is particularly preferred that the elastically compressible layer comprises a rubber material. Non-foamed rubber is particularly preferred because of its inability to retain liquid.

However, the use of foamed material is not entirely excluded according to the invention. However, according to such an embodiment, in that case the elastically compressible layer should comprise a closed cell material.

The covering will in particular exhibit a suitable degree of comfort (including resilience) and permeability to liquid, if the elastically compressible layer comprises a variety of material parts. The liquid can then flow down easily and quickly between the various material parts. The material parts are preferably in the form of a variety or at least one of flakes, rods, pellets, granules and fibers. The terms "flakes" and "fibers" refer to loose pieces of material that have random and possibly irregular shapes. In this context, elongated shapes can be envisaged, here also referred to as fibers, granular shapes, with or without a spherical appearance, and flakes, which have different diameters in several cross-sectional directions. In particular with the fibers, the shortest diameter in a first direction will be significantly smaller than a largest diameter, measured in a different direction.

A covering according to the invention can be manufactured in a simple manner when the material parts are poured loose, as a result of which the plurality of material parts is situated in an arbitrary orientation. The invention therefore preferably relates to a covering wherein the plurality of material parts is oriented arbitrarily. This leads to a suitable liquid discharge through the elastically compressible layer.

An alternative preference is given to a covering that can be applied as a ready-to-use product to a stable floor or the like. The covering is therefore preferably in the form of a mat. Here, the elastically compressible layer is incorporated in the liquid-permeable film that has a lower liquid permeability than the elastically compressible layer. The film therefore surrounds the layer of the elastically compressible material on the top and bottom. The elastically compressible material is also preferably enclosed on the sides. For example, the film can also extend along the peripheral sides, or optionally another material can be located on the peripheral sides and be connected to the liquid-permeable film located at the top and the bottom. In this way a mat is obtained that is closed all round.

As mentioned above, it is preferred that a plurality of fibers is used to form the elastically compressible layer. For this, preference is given to a covering wherein the material parts: - have a maximum dimension or 10 mm in a first direction, preferably a maximum or 7 mm, more preferably a maximum or 5 mm, and have a minimum dimension of at least 0.005 mm in a second direction deviating from the first direction, preferably of at least 0.008 mm, more preferably of at least 0.01 mm. This yields an elastically compressible layer that has excellent water permeability and also offers animals a comfortable substrate.

A covering with a particularly long service life can be obtained when the elastically compressible layer is formed from a plurality of mutually adhered material parts. Preferably, the adhesion of the material parts can be obtained, preferably by means of a pressure-sensitive adhesive. The adhesive is preferably urine-resistant, or at least resistant to degradation by compounds present in urine and stool.

When the covering according to the invention is not placed directly on a solid foundation, for example a concrete stable floor provided with grooves or openings, it can be placed on a grid to be placed separately on a base or substrate, or on a support structure with a grid-like structure. Such a construction may have a shape such as a pallet, with a bearing part on which the covering is positioned and legs extending from the bearing part to the ground or the like that holds the bearing part off the ground so that liquid can flow away in an open space between the load-bearing part and the base or substrate. As a result, moisture will never be able to be sucked back from the substrate beneath the grid to the elastically compressible layer in the covering according to the invention. The invention therefore also relates to a covering wherein the grid comprises a supporting part for supporting the elastically compressible covering and supporting legs extending from the supporting part to the substrate or subsurface for keeping the supporting part away from the substrate or subsurface so that liquid can be discharged in an open space between the supporting part and the substrate. If such a grid-like structure or load-bearing structure is damaged and needs to be replaced or repaired, it is preferable that the grid-like structure has a size corresponding to a size of the covering. In this case, the elastically compressible layer lies on the grid with particular preference and the foil can be attached to the grid on all sides at the top. This yields a structure of a grid with an elastically compressible layer on top and the foil over it. This way you can replace a panel as a whole.

According to a further alternative embodiment, it is also preferred that the individual coverings, as mentioned above in the form of, for example, a mat, are mutually connected to provide a continuously comfortable surface to the animals.

In particular, it is also possible to place several gratings or grids, each with its own elastically compressible layer, referred to as elements, adjacent to a substrate and to place a foil extending over several elements as an upper layer.

A particularly advantageous effect of the invention when using a grid with the elastically compressible layer covered by the film over it is that no clogging of the elastically compressible layer with (very) fine solid material is obtained because such (very) fine solid material is pressed out of the layer when an animal compresses the elastic material and squeezes out the fine solid material together with the moisture which then ends up in the open space formed by the grid at the bottom.

If, nevertheless, a rapid discharge of liquid is desired, the covering according to the invention can be designed such that the grid comprises a supporting part for supporting the elastically compressible covering and supporting legs extending from the supporting part to the subsurface for keeping the supporting part away from the subsurface so that liquid can be discharged in an open space between the supporting part and the substrate. This provides an accelerated discharge of liquid, which may be useful, for example, when cleaning the covering with water or when a large supply of droppings with a large component of liquid components is present on the covering. The covering can for instance comprise at least 4 such openings per square meter, preferably at least 8 openings or at least 12 openings.

According to a further aspect, the invention relates to an application of a covering according to the invention in a stable. Animals that reside in the stable will experience a high degree of comfort because the covering offers a dry and resilient support.

A further advantage of the invention resides in the fact that a manure is separated into a thick and thin fraction. The thick fraction remains on the top of the covering according to the invention and the thin fraction passes through the covering according to the invention and is discharged via, for example, drainage or gutters or gaps in the subfloor to a storage.

The invention will be explained in more detail below with reference to a drawing. The drawing shows in:
FIG. 1 an exploded view of a grid-like construction according to the invention,
FIG. 2 an assembly ready for use with a covering according to the invention,
FIG. 3 shows an example of a construction of a comfort layer, and
FIG. 4 shows an example of a film.

In the figures, the same parts are indicated by the same reference numerals. However, the parts necessary for a practical implementation of the invention are not all shown, due to the simplicity of the representation.

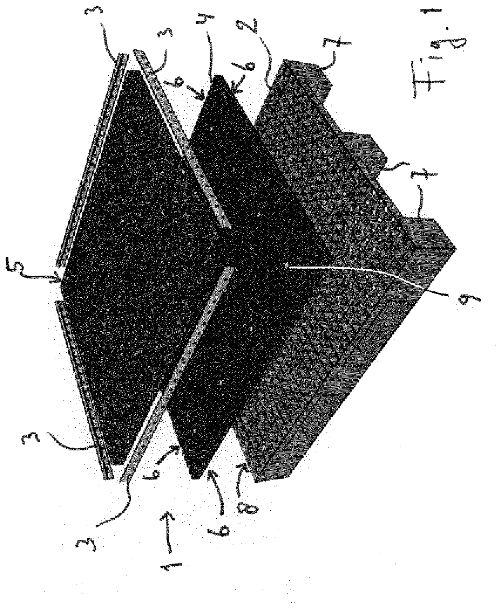

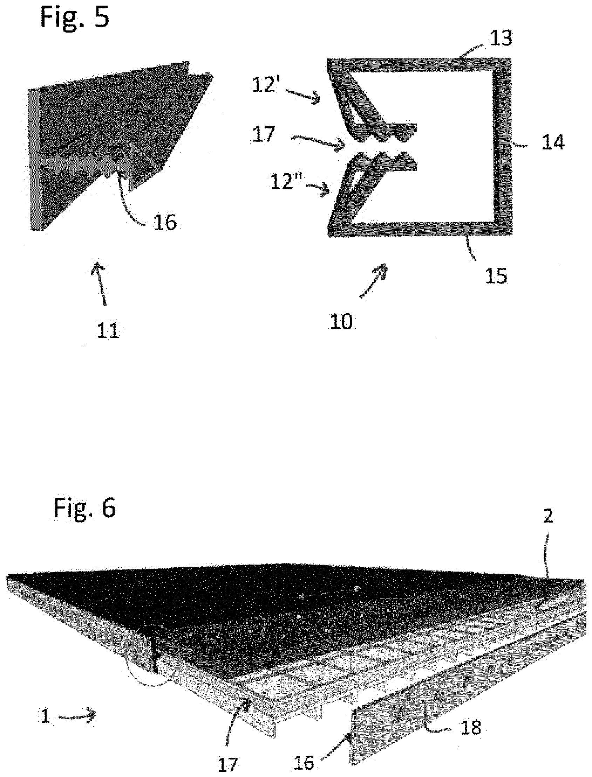

FIG. 1 shows an exploded view of a covering 1 and a grid-like structure 2. Also shown is a strip 3 that runs around the covering and ensures that the covering 1 does not extend beyond an outer circumference of the grid-like structure 2 in the embodiment shown. The strip 3 is connected with screws or the like to the elastically compressible material, for which reason openings are provided in the strip 3. An alternative way of coupling the strip to the elastically compressible material is shown in the explosion view of FIG. 5. The housing 10 is received on the circumference of the elastically compressible material 4 and can be made of a substantially rigid or slightly elastically deformable material. An animal that stands or lies on the floor of this housing 10 will then not experience any nuisance or inconvenience as a result. The covering will be coupled to the housing 10, and therefore to the elastically compressible material 10, with the same technical effect as mentioned above, when an insertion strip 11 with a coupling cam 16 is fed into an opening 17 of the housing 10. Preferably cooperating latching cams or teeth are provided in the opening 17 of the housing 10 and the coupling cam 16 of the strip 11 to ensure a continuous coupling. This strip 11 can run around the structure 2, as a result of which the covering is fixed all around. Such a method of coupling is faster and less labor-intensive than a method with a multitude of screws. Moreover, the covering is fed into the opening in the housing, so that it is optimally tensioned, which enables improved comfort and easier cleaning of the structure.

The housing 10 may have a square cross-section with walls 12', 12 ", 13, 14 and 15 as shown in the drawing, but a triangular cross-sectional shape is also possible without any limitation, wherein the housing has the walls 12', 12" and additionally has two walls 13" and 15" which meet at their ends remote from the walls 12', 12". A partial circular cross-section is also possible in which a wall 14 " with both ends is connected to the walls 12' and 12 " as in the figure the walls 13 and 15 are connected thereto. Even a single strip could be possible, formed by the wall elements 12 'and 12 ", in which case, however, these two wall elements must be mutually connected at distances to be determined in order to maintain mutual positioning in order to prevent these wall elements from moving away from each other and the strip 11 is removed from the opening. The strip 11 may in that case be formed from a plurality of short strips 11 or a single strip 11 which, however, is not provided with a coupling cam 16 over its entire length.

The housing can optionally be integrated in a peripheral wall of the grid 2, thereby simplifying the construction. This embodiment is shown in the partial cross-sectional view of FIG. 6. The mat of the compressible material is hereby enclosed by the wall 18 of the strip 11 which is arranged all around. Because the grid 2 is a rigid construction, the coupling of the strip 11 with the grid will provide a permanently strong connection. For example, the wall 18 may be somewhat flexible to provide increased comfort to the animals. The wall can extend to the top of the mat and the covering, but may optionally end at a distance therefrom, at a position between the top of the grid 2 and the top of the elastically compressible material 10 and the cloth 5.

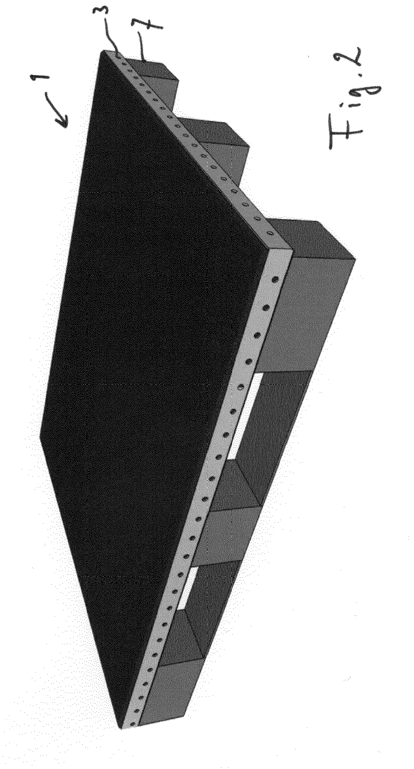

The covering 1 comprises an elastically compressible layer 4 and a cloth 5, also referred to as film 5 in the description of this invention. The film is, for convenience' sake, shown in the figure only at a position above the elastically compressible layer 4, but may extend in an assembled form, as shown in FIG. 2, around the elastically compressible layer 4. The film will preferably be located above the elastically compressible layer 4 and optionally on the peripheral sides 6 of that layer 4. This provides an optimum removal of liquid from the covering 1, in particular from the elastically compressible layer 4, because liquid contained in the compressible layer 4 is pressed through the holes of the grid 2 when pressed out of the elastically compressible layer 4 and will end up the open space between legs 7. It will then end up on the surface under the grid 2.

The elastically compressible layer 4 is provided with through holes 9 which ensure a certain drainage of moisture, even if the pores in the elastically compressible layer 4, which ensure drainage of moisture, were completely clogged by very fine material which unexpectedly would have penetrated the foil 5.

FIG. 2 shows an assembly of covering 1 with grid-like construction 2 and a strip 3, which is ready for placement on a stable floor or the like. The strip is aligned with or is located outside the outer circumference of the structure 2. If a strip 3 is provided, the mat will be enclosed within the strip 3. Multiple constructions 2 can be positioned against each other on a stable floor, wherein also the mats, and therefore the coverings 1, form a continuous living area for the animals in the stable. The grid-like structure 2 has legs or uprights 7 extending downwardly from a bearing surface 8 for the covering 1, so that a space is obtained between the bearing surface 8 and a surface on which the grid-like structure 2 is placed, so that liquid passing through the grid-like structure 2 can flow away without coming into contact with the covering 1.

The mat can be rigidly coupled to the grid-like structure 2, whereby a simple placement of the entire structure is obtained or can be used separately therefrom, in which case firstly the grid-like structure 2 and secondly the mat must be placed. The advantage of the latter embodiment is that replacement is simpler and cheaper with a view to material costs, because in the case of a damaged mat only the mat has to be replaced instead of the whole of mat and grid-like construction 2. When personnel costs are included in the costs, it is more advantageous to replace a prefab element of grating, elastically compressible layer and foil as a whole if a part thereof is damaged.

According to an alternative embodiment thereof, a plurality of grids or gratings can be placed on a substrate, whereafter the elastically compressible layer according to the invention is positioned over the plurality of gratings. For example, the elastically compressible layer can take the form of a material layer to be unrolled, analogous to floor covering. The foil can then be placed analogously to floor covering over the whole of the elastically compressible layer, wherein the foil is preferably tightened somewhat, so that a seamless whole is obtained at the top.

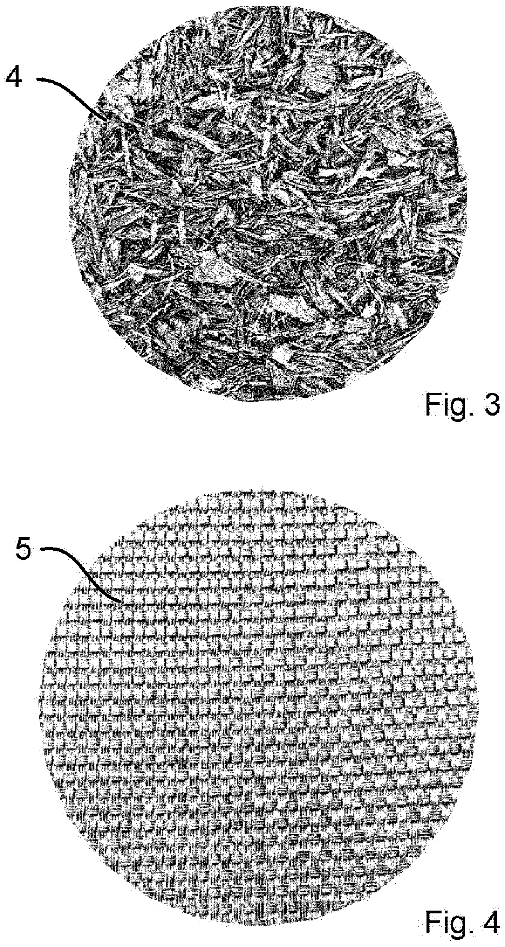

FIG. 3 shows an example of a construction of an elastically compressible layer 4 as a comfort layer 4. FIG. 4 shows an example of a cloth 5 as film 5. The film can be a woven material, but also a porous non-woven material or a drawn or extruded foil or the like. The term "foil" includes all these possible meanings including film, cloth and so on.

When used as a substrate for a sports field, the grid-like construction does not have to be applied, but it is sufficient to place the covering 1 on a substrate, for example made of cellular / foamed concrete, zoab or sand.

The thickness of the layer of compressible material can be, for example, 5 cm, but smaller or even larger thicknesses can also be used, depending on the demands of the user and the desired total comfort to be obtained, including moisture permeability and elastic compression. In general, when used in a stable, it is preferred that the impression is not maximum when an animal residing in the shed lies on the material. Within the invention, the impression is allowed to be maximal when an animal walks over the covering according to the invention.

The invention is not limited to the embodiments described above and shown in the figures. The invention is only limited by the appended claims.

## Claims

1. A stable floor covering comprising an elastically compressible liquid-permeable layer (4) and a liquid-permeable film (5) covering the elastically compressible layer on top, **characterized in that** the film has a lower liquid permeability than the elastically compressible layer.

2. A covering according to claim 1, comprising a grid-like structure (2) which is adapted to allow a liquid to pass from an upper side to a lower side thereof, which grid-like structure is situated under the elastically compressible layer (4).

3. A covering of claim 1, wherein the elastically compressible layer (4) comprises a rubber material.

4. A covering of claim 1, wherein the elastically compressible layer (4) comprises a closed cell material.

5. A covering of claim 1, wherein the elastically compressible layer (4) comprises a plurality of material parts, preferably in the form of a plurality of at least one of flakes, rods, pellets, granules and fibers.

6. A covering according to claim 5, wherein the plurality of material parts is oriented arbitrarily.

7. A covering according to any one of the preceding claims, wherein the elastically compressible layer (4) is incorporated in the liquid-permeable film that has a lower liquid permeability than the elastically compressible layer, preferably with the formation of a mat that is closed all round.

8. A covering of claim 5, wherein the material parts:
- have a maximum dimension of 10 mm in a first direction, preferably a maximum of 7 mm, more preferably a maximum of 5 mm, and
- have a minimum dimension of at least 0.005 mm in a second direction deviating from the first direction, preferably of at least 0.008 mm, more preferably of at least 0.01 mm.

9. A covering according to any one of the preceding claims, wherein the elastically compressible layer (4) is formed from a plurality of mutually adhered material parts, preferably wherein the adhesion of the material parts is obtained by means of a pressure-sensitive adhesive.

10. A covering of claim 2, wherein the grid-like structure (2) has a size corresponding to a size of the covering.

11. A covering according to claim 1, wherein the elastically compressible layer (4) comprises through openings which have a diameter of at least 3 mm, preferably at least 5 mm, more preferably at least 10 mm, for passing liquid from an upper side under the influence of gravity to an underside of the elastically compressible layer.

12. A covering as claimed in claim 2, wherein the grid (2) comprises a supporting part for supporting the elastically compressible covering and supporting legs extending from the supporting part to the subsurface for keeping the supporting part away from the subsurface so that liquid can be discharged in an open space between the supporting part and the substrate.

## Patentansprüche

1. Stabiler Bodenbelag, umfassend eine elastisch zusammenpressbare, flüssigkeitsdurchlässige Schicht (4) und einen flüssigkeitsdurchlässigen Film (5), der die elastisch zusammenpressbare Schicht auf der Oberseite bedeckt, **dadurch gekennzeichnet, dass** der Film eine geringere Flüssigkeitsdurchlässigkeit aufweist als die elastisch zusammenpressbare Schicht.

2. Belag nach Anspruch 1, umfassend eine gitterartige Struktur (2), die ausgebildet ist, eine Flüssigkeit von einer oberen Seite zu einer unteren Seite hindurchgehen zu lassen, wobei die gitterartige Struktur unter der elastisch zusammenpressbaren Schicht (4) liegt.

3. Belag nach Anspruch 1, wobei die elastisch zusammenpressbare Schicht (4) ein Kautschukmaterial umfasst.

4. Belag nach Anspruch 1, wobei die elastisch zusammenpressbare Schicht (4) ein geschlossenzelliges Material umfasst.

5. Belag nach Anspruch 1, wobei die elastisch zusammenpressbare Schicht (4) eine Vielzahl von Materialteilen umfasst, vorzugsweise in der Form einer Vielzahl von zumindest einem von Flocken, Stäben, Pellets, Granulaten und Fasern.

6. Belag nach Anspruch 5, wobei die Vielzahl von Materialteilen beliebig ausgerichtet ist.

7. Belag nach einem der vorstehenden Ansprüche, wobei die elastisch zusammenpressbare Schicht (4) in dem flüssigkeitsdurchlässigen Film eingearbeitet ist, der eine niedrigere Flüssigkeitsdurchlässigkeit als die elastisch zusammenpressbare Schicht aufweist, vorzugsweise mit der Bildung einer Matte, die allseitig geschlossen ist.

8. Belag nach Anspruch 5, wobei die Materialteile:
- eine maximale Dimension von 10 mm in einer ersten Richtung aufweisen, vorzugsweise ein Maximum von 7 mm, bevorzugter ein Maximum von 5 mm und
- eine minimale Dimension von mindestens 0,005 mm in einer zweiten Richtung aufweisen, die von der ersten Richtung abweicht, vorzugsweise von mindestens 0,008 mm, bevorzugter mindestens 0,01 mm.

9. Belag nach einem der vorstehenden Ansprüche, wobei die elastisch zusammenpressbare Schicht (4) aus einer Vielzahl von wechselseitig anhaftenden Materialteilen gebildet ist, wobei vorzugsweise die Anhaftung der Materialteile durch einen druckempfindlichen Klebstoff erhalten wird.

10. Belag nach Anspruch 2, wobei die gitterartige Struktur (2) eine Größe aufweist, die einer Größe des Belags entspricht.

11. Belag nach Anspruch 1, wobei die elastisch zusammenpressbare Schicht (4) Durchgangsöffnungen umfasst, die einen Durchmesser von mindestens 3 mm, vorzugsweise mindestens 5 mm, bevorzugter mindestens 10 mm aufweisen, um Flüssigkeit von einer oberen Seite unter dem Einfluss von Schwerkraft zu einer Unterseite der elastisch zusammenpressbaren Schicht durchgehen zu lassen.

12. Belag nach Anspruch 2, wobei das Gitter (2) einen Stützteil zum Stützen des elastisch zusammenpressbaren Belags und Stützschenkel umfasst, die sich von dem Stützteil zu der Unterseite erstrecken, um den Stützteil von der Unterseite weg zu halten, sodass Flüssigkeit in einen offenen Raum zwischen dem Stützteil und dem Substrat abgegeben werden kann.

## Revendications

1. Revêtement de sol stable comprenant une couche perméable aux liquides élastiquement compressible (4) et un film perméable aux liquides (5) revêtant la couche élastiquement compressible sur le dessus, **caractérisé en ce que** le film présente une perméabilité aux liquides inférieure à celle de la couche élastiquement compressible.

2. Revêtement selon la revendication 1, comprenant une structure en forme de grille (2) qui est adaptée pour permettre à un liquide de passer d'un côté supérieur à un côté inférieur de celle-ci, laquelle structure en forme de grille est située sous la couche élastiquement compressible (4).

3. Revêtement selon la revendication 1, dans lequel la couche élastiquement compressible (4) comprend un matériau en caoutchouc.

4. Revêtement selon la revendication 1, dans lequel la couche élastiquement compressible (4) comprend un matériau à cellules fermées.

5. Revêtement selon la revendication 1, dans lequel la couche élastiquement compressible (4) comprend une pluralité de parties de matériau, de préférence sous la forme d'une pluralité d'au moins un de paillettes, tiges, pastilles, granulés et fibres.

6. Revêtement selon la revendication 5, dans lequel la pluralité de parties de matériau est orientée arbitrairement.

7. Revêtement selon l'une quelconque des revendications précédentes, dans lequel la couche élastiquement compressible (4) est incorporée dans le film perméable aux liquides qui présente une perméabilité aux liquides plus faible que la couche élastiquement compressible, de préférence avec la formation d'un tapis qui est fermé à sa périphérie.

8. Revêtement selon la revendication 5, dans lequel les parties de matériau :
- présentent une dimension maximale de 10 mm dans une première direction, de préférence un maximum de 7 mm, plus préférentiellement un maximum de 5 mm, et
- présentent une dimension minimale d'au moins 0,005 mm dans une seconde direction s'écartant de la première direction, de préférence d'au moins 0,008 mm, plus préférentiellement d'au moins 0,01 mm.

9. Revêtement selon l'une quelconque des revendications précédentes, dans lequel la couche élastiquement compressible (4) est formée d'une pluralité de parties de matériau adhérant mutuellement, de préférence dans lequel l'adhérence des parties de matériau est obtenue au moyen d'un adhésif sensible à la pression.

10. Revêtement selon la revendication 2, dans lequel la structure en forme de grille (2) présente une taille correspondant à une taille du revêtement.

11. Revêtement selon la revendication 1, dans lequel la couche élastiquement compressible (4) comprend des ouvertures traversantes qui présentent un diamètre d'au moins 3 mm, de préférence d'au moins 5 mm, plus préférablement d'au moins 10 mm, pour faire passer du liquide d'un côté supérieur sous l'influence de la gravité à un côté inférieur de la couche élastiquement compressible.

12. Revêtement selon la revendication 2, dans lequel la grille (2) comprend une partie de support pour supporter le revêtement élastiquement compressible et des pieds de support s'étendant de la partie de support à la sous-surface pour maintenir la partie de support à l'écart de la sous-surface de sorte que du liquide puisse être évacué dans un espace ouvert entre la pièce de support et le substrat.
